# EUROPÄISCHE PATENTSCHRIFT

(11) **EP 0 482 444 B1**
(45) Veröffentlichungstag und Bekanntmachung des Hinweises auf die Patenterteilung: **25.05.1994**
(21) Anmeldenummer: 91117343.3
(22) Anmeldetag: 11.10.1991
(51) Int. Cl.: C09C 1/04, C08K 3/22, C09C 1/22

(54) **Verfahren zur Herstellung von mit Metalloxiden dotierten Zinkoxidpigmenten**
Process for preparing zinc oxide pigments doped with metal oxides
Procédé de préparation de pigments d'oxyde de zinc dopés par des oxydes de métaux

(30) Priorität: 20.10.1990 DE 4033417
(43) Veröffentlichungstag der Anmeldung: 29.04.1992
(73) Patentinhaber: BASF Aktiengesellschaft, 67063 Ludwigshafen (DE)
(72) Erfinder: Dausch, Wilma M., Dr., W-6703 Limburgerhof (DE)

(56) Entgegenhaltungen:
- DE-C- 589 783
- FR-A- 931 155
- US-A- 2 579 020
- US-A- 2 887 632
- US-A- 3 264 229

## Beschreibung

Vorliegende Erfindung betrifft ein Verfahren zur Herstellung von mit Metalloxiden dotierten Zinkoxid-Pigmenten, die je nach Dotierungsmetall verschiedene Farbtöne zeigen.

Dotierte Zinkoxidpigmente werden bereits in der US-PS 2,028,980 beschrieben. Die Pigmente werden dadurch hergestellt, daß man eine Mischung der Oxide thermisch behandelt, wobei man dafür Sorge trägt, daß das färbende Metalloxid in der Oxidationsstufe MeO vorliegt. Bei Metallen mit höheren Oxidationsstufen wird daher der Glühprozeß unter solchen Bedingungen vorgenommen, daß die MeO-Stufe weder unter- noch überschritten wird. Anstelle von den Oxiden selbst kann man auch von geeigneten Verbindungen der Metalle ausgehen, die durch thermische Dissoziation während des Glühprozesses in die Oxide übergeführt werden können. Als besonders geeignet werden die entsprechenden Metallsulfate wegen ihrer hohen Zersetzungstemperatur genannt.

Nach einer Variante dieses Verfahrens werden gemäß der DE-PS 589 783 auch die entsprechenden Metallnitrate oder Carbonate eingesetzt. So werden aus den Sulfaten des Zinks und Mangans aus wäßriger Lösung zunächst die Carbonate gefällt, diese bei 700°C in einem CO/CO₂-Strom reduziert und anschließend in einem von Sauerstoff befreiten Stickstoffstrom bei 900°C nachgeglüht.

Die Herstellung der mit Metalloxiden dotierten Zinkoxidpigmente aus Oxid- bzw. Salzmischungen ist trotz der einfachen Durchführung, Mischen und Brennen, nicht unproblematisch. Die Bildung von homogenen Mischphasen erfordert die Diffusion der Atome oder Ionen über die Korngrenzen hinweg in das Kristallgitter des Partners und dort gegebenenfalls den Aufbau von neuen Strukturen. Dieser Vorgang erfordert Zeit und sehr oft auch hohe Temperaturen, selbst wenn eine intensive Mischung der Ausgangsmaterialien und die Verwendung von sehr feinkristallinen Substanzen die Prozesse erleichtern. Durch die hohen Temperaturen und die lange Zeitdauer findet darüber hinaus ein unerwünschtes Kornwachstum statt, so daß die Pigmente nur ein geringes Deckvermögen besitzen und als Färbemittel ungeeignet sind.

Eine gleichmäßige Verteilung der Atome in einem gemeinsamen Kristallgitter läßt sich durch Fällung schwerlöslicher Verbindungen aus Lösungen erhalten, die alle Komponenten in homogener Verteilung enthalten. Oxidische Mischkristalle können so in zwei Schritten über die Fällung einer geeigneten Ausgangsverbindung, die dann bei höherer Temperatur zum Oxid umgesetzt wird, hergestellt werden.

Obwohl die Fällung eines Precursors den Vorteil einer guten und leicht erreichbaren Durchmischung der Ausgangssubstanzen mit sich bringt, birgt die Methode auch Nachteile. Die Mutterlauge, meist Wasser, ist nur bedingt wieder verwertbar und enthält immer Restmengen an anorganischen Salzen, oft von Schwermetallen, die nach den Kläranlagen noch die Kapazitäten von Sondermülldeponien belasten. Um mitgefällte störende Salze zu entfernen, müssen die Filterkuchen mit sauberem Wasser salzfrei gewaschen werden, was ebenfalls aufwendig ist.

Anorganische Pigmente, bei denen die Farbe durch den Einbau von Ionen mit d- und f-Elektronen in ein an sich farbloses Wirtsgitter hervorgerufen wird, reagieren besonders empfindlich auf Schwankungen der Herstellbedingungen. Zu geringe Brenntemperatur, schlechte Durchmischung der Ausgangsstoffe und kurze Calcinierungszeiten können Inhomogenitäten im Produkt hervorrufen, die die Farbqualität vermindern. Wird die Farbe eines Pigments durch den Einbau von Ionen, die oxidierbar sind, z.B. Mangan bewirkt, kann auch der Kontakt mit Sauerstoff zur Verschlechterung der Farbeigenschaften führen. Bei der Herstellung muß dafür gesorgt werden, daß die Oxidationsstufen der eingebauten Metallatome erhalten bleiben oder nach Oxidation wieder reduziert werden.

Bei mangandotierten Zinkoxiden wird die Pigmentfarbe durch den Einbau von Mangan(II)-Oxid bewirkt, wobei die Pigmente je nach Mangangehalt gelb bis rot sind. Liegen höherwertige Manganoxide vor, verschlechtert sich das Chroma. Im Extremfall werden nur Farbtöne von Olivgrün bis Braun erreicht.

Die bisher bekannt gewordenen Herstellverfahren für dotierte Zinkoxide Zeigen die oben aufgeführten Probleme. Aufgabe der Erfindung war es daher, ein Herstellverfahren zu finden, das zum einen erlaubt, farbreine mit Metalloxiden dotierte Zinkoxide auf reproduzierbare Weise zu synthetisieren, und bei dem zum anderen praktisch keine schwierig zu entsorgenden flüssigen und gasförmigen Emissionen auftreten.

Es wurde nun gefunden, daß diese Aufgabe bei einem Verfahren zur Herstellung von mit Metalloxiden dotierten Zinkoxidpigmenten dadurch gelöst werden kann, daß man die Oxide, Carbonate, Hydroxide und/oder Hydroxicarbonate des Zinks in Gegenwart von Wasser und von Oxiden, Carbonaten, Hydroxiden, Hydroxicarbonaten, Oxalaten oder Formiaten der Dotierungsmetalle mit Ameisensäure und/oder Oxalsäure in einer mindestens für die Überführung der genannten Oxide, Carbonate, Hydroxide und/oder Hydroxicarbonate zu Formiaten oder Oxalaten ausreichenden Menge zu einer Paste verarbeitet, die Paste trocknet, vermahlt und bei Temperaturen von 700 bis 1100°C in einer Inertgasatmosphäre calciniert.

Als Metalloxide, mit denen das Zinkoxid dotiert werden kann, kommen insbesondere die zweiwertigen Oxide des Ca, Fe, Mn, Mg, Co und Ni infrage.

Das erfindungsgemäße Verfahren kann so durchgeführt werden, daß man das Oxid, Hydroxid, Carbonat und/oder Hydroxicarbonat des zweiwertigen Zinks sowie die entsprechenden Verbindungen der zweiwertigen Dotierungsmetalle in Gegenwart von Wasser mit Ameisensäure und/oder Oxalsäure zu den entsprechenden Formiaten und/oder Oxalaten umsetzt. Die Wassermenge wird dabei so bemessen, daß die Mischung eine pastenförmige Konsistenz aufweist. Im allgemeinen ist dies bei Wassergehalten von 20 bis 45 Gew.%, bezogen auf die übrigen Einsatzstoffe der Fall. Die Umsetzung kann bei Temperaturen von 10 bis 90°C durchgeführt werden. Die Säuren werden mindestens in solchen Mengen eingesetzt, die stöchiometrisch erforderlich sind, um die eingesetzten Metallverbindungen in die entsprechenden Oxalate bzw. Formiate zu überführen. Ein Überschuß an Säure über die stöchiometrisch erforderliche Menge schadet nicht, sollte aber zweckmäßig 10 % nicht übersteigen.

Gemäß einer weiteren Variante des erfindungsgemäßen Verfahrens kann man auch schrittweise in der Weise vorgehen, daß man die Oxide, Carbonate, Hydroxide und/oder Hydroxicarbonate der zweiwertigen Dotierungsmetalle mit der Ameisensäure und/oder Oxalsäure in Gegenwart von Wasser umsetzt und dann in die entstandene Lösung die Verbindungen des Zinks einträgt und umsetzt.

Auf eine Filtration oder auf das Waschen des in der ersten Stufe erhaltenen Vorproduktes kann verzichtet werden, weil die eingesetzten Wassermengen gering sind und bei der Umsetzung neben den Metallformiaten bzw. -oxalaten lediglich Verbindungen entstehen, die bei der nachfolgenden Trocknung oder Calcinierung ohnehin aus der Reaktionsmischung ausgetrieben werden.

Nach der Umsetzung wird die entstehende Paste getrocknet. Da die gebildeten Oxalate bzw. Formiate nicht oxidationsempfindlich sind, muß die Trocknung nicht unter Luftausschluß durchgeführt werden.

Die Trocknung wird üblicherweise bei Temperaturen von 50 bis 100°C durchgeführt. Anschließend an die Trocknung wird das Produkt gemahlen und schließlich unter Inertgasatmosphäre, wie in einem Stickstoff- oder Kohlendioxidstrom bei Temperaturen von 700 bis 1100°C gebrannt. Ein Zusatz von Reduktionsmitteln erübrigt sich, da die Formiate bzw. Oxalate selbst reduzierend wirken und somit eine unerwünschte Oxidation der zweiwertigen Dotierungsmetalloxide unterbleibt.

Die erfindungsgemäß hergestellten Pigmente eignen sich für die Einfärbung von Kunststoffen. Wegen ihrer hohen Temperaturstabilität können sie insbesondere für die Einfärbung von Kunststoffen eingesetzt werden, die bei Temperaturen oberhalb von 280°C verarbeitet werden.

### Beispiel 1

Kobaltdotiertes Zinkoxid

228,24 g Zinkhydroxidcarbonat wurden mit 10,02 g Kobalthydroxidcarbonat in einem Turbula-Mischer 30 Minuten gemischt. Die fertige Mischung wurde innerhalb von ca. 15 Minuten zu einer Mischung aus 277,4 g Oxalsäuredihydrat und 277,7 g Wasser gegeben. Nach 60 Minuten Nachrühren wurde die fertige Paste bei 50°C im Umlufttrockenschrank getrocknet, aufgemahlen und bei 950°C unter Stickstoff eine Stunde lang gebrannt. Es entstand ein intensiv grünes Pigment.

### Beispiel 2

Eisen(II)dotiertes Zinkoxid

126,99 g einer FeOOH-Suspension (3,52 Gew.% Eisen) wurden mit 548,40 g Wasser und 653,03 g Oxalsäure versetzt und die Suspension auf 90°C unter Rühren aufgeheizt. In die grüne Lösung wurden innerhalb von 20 Minuten 465,98 g Zinkhydroxidcarbonat gegeben und 60 Minuten lang nachgerührt. Die fertige Paste wurde bei 60°C getrocknet, aufgemahlen und bei 800°C unter Stickstoff eine Stunde lang gebrannt. Es entstand ein gelbgrünes Pigment.

### Beispiel 3

Magnesium-mangandotiertes Zinkoxid

276,82 g Zinkoxid, 48,84 g Mangancarbonat und 20,25 g Magnesiumhydroxidcarbonat wurden in einem Turbula-Mischer miteinander vermischt und anschließend innerhalb von 60 Minuten in eine Suspension aus 554,7 g Oxalsäuredihydrat und 300 g Wasser gegeben. Nach 60 Minuten Nachrührzeit wurde die fertige Paste bei 60°C getrocknet, aufgemahlen und anschließend bei 950°C unter Stickstoff eine Stunde lang gebrannt. Es entstand ein leuchtend gelboranges Pigment.

### Beispiel 4

Mangandotiertes Zinkoxid

427,95 g Zinkhydroxidcarbonat und 48,84 g Mangancarbonat wurden in einem Turbula-Mischer 30 Minuten gemischt. Die fertige Mischung wurde innerhalb von ca. 40 Minuten unter Rühren zu einer Mischung aus 554,7 g Oxalsäuredihydrat und 550,0 g Wasser gegeben. Nach 30 Minuten Nachrühren wurde die fertige Paste bei 60°C im Vakuumtrockenschrank getrocknet, aufgemahlen und anschließend bei 950°C 1 h unter Stickstoff gebrannt. Es entstand ein oranges Pigment.

### Vergleichsbeispiel 1

100,0 g ZnSO₄·7H₂O und 6,53 g MnSO₄·H₂O wurden miteinander vermahlen und anschließend bei 950°C 15 Minuten lang geglüht. Danach wurde das Produkt in einem Strom aus 50 Vol.-% CO und 50 Vol.-% CO₂ 45 Minuten lang gebrannt. Es entstand ein rotbraunes, farblich unattraktives, inhomogenes Produkt.

### Vergleichsbeispiel 2

431,31 g ZnSO₄·7H₂O und 28,14 g MnSO₄·4H₂O wurden in 1 l destilliertem Wasser gelöst und mit 295,9 g NH₄CO₃ ausgefällt. Es wurde 15 Minuten lang nachgerührt. Das gefällte Carbonat wurde abgesaugt mit 15 l destilliertem Wasser sulfatfrei gewaschen - der Filterkuchen wurde jedoch steinhart und mußte zwischendurch gelockert und aufgerührt werden. Das Fällprodukt wurde bei 60°C 2 Stunden lang getrocknet, aufgemahlen, danach bei 700°C in einem Strom aus 50 Vol.-% CO und 50 Vol.-% CO₂ 1 h reduziert und anschließend 1 h bei 950°C getempert. Es entstand ein oranges Pigment.

In der Mutterlauge waren 520 mg/kg Zink, 18 mg/kg Mangan, 103 g/kg Sulfat und 52 g/kg Ammoniak enthalten. Nachdem 5 l Waschwasser verbraucht worden waren, befanden sich im Filtrat 800 mg/kg Zink, weniger als 3 mg/kg Mangen, 1,2 g/kg Sulfat, 4,4 g/kg Ammoniak, nach 10 l Waschwasser weniger als 3 mg/kg Zink und Mangan, 9 mg/kg Sulfat und 250 mg/kg Ammoniak. Mutterlauge und Waschwasser müssen vor der Entsorgung aufgearbeitet werden.

## Patentansprüche

1. Verfahren zur Herstellung von mit Metalloxiden dotierten Zinkoxidpigmenten, dadurch gekennzeichnet, daß man die Oxide, Carbonate, Hydroxide und/oder Hydroxicarbonate des Zinks in Gegenwart von Wasser und von Oxiden, Carbonaten, Hydroxiden, Hydroxicarbonaten, Oxalaten oder Formiaten der Dotierungsmetalle mit Ameisensäure und/oder Oxalsäure in einer mindestens für die Überführung der genannten Oxide, Carbonate, Hydroxide und/oder Hydroxicarbonate zu Formiaten oder Oxalaten ausreichenden Menge zu einer Paste verarbeitet, die Paste trocknet, vermahlt und bei Temperaturen von 700 bis 1100°C in einer Inertgasatmosphäre calciniert.

2. Verfahren nach Anspruch 1, dadurch gekennzeichnet, daß man als Verbindungen der Dotierungsmetalle diejenigen des zweiwertigen Eisens, Mangans, Kobalts, Nickels, Calciums und/oder Magnesiums einsetzt.

3. Verfahren nach Ansprüchen 1 bis 2, dadurch gekennzeichnet, daß man die Pastenverarbeitung bei Temperaturen von 10 bis 90°C vornimmt.

4. Verfahren nach Ansprüchen 1 bis 3, dadurch gekennzeichnet, daß man die Ameisensäure und/oder Oxalsäure in einem Überschuß von bis zu 10 % über die stöchiometrisch erforderliche Menge einsetzt.

5. Verwendung der gemäß Ansprüchen 1 bis 4 hergestellten Pigmente für die Einfärbung von Kunststoffen.

6. Verwendung der gemäß Ansprüchen 1 bis 4 hergestellten Pigmente für die Einfärbung von Kunststoffen, die bei Temperaturen oberhalb von 280°C verarbeitet werden.

## Claims

1. A process for preparing a metal oxide-doped zinc oxide pigment, which comprises processing an oxide, carbonate, hydroxide or hydroxycarbonate of zinc in the presence of water and an oxide, carbonate, hydroxide, hydroxycarbonate, oxalate or formate of the doping metal into a paste using formic acid or oxalic acid in an amount which is at least sufficient for converting the oxides, carbonates, hydroxides or hydroxycarbonates mentioned into formates or oxalates, drying, grinding and calcining at from 700 to 1100°C in an inert gas atmosphere.

2. A process as claimed in claim 1, wherein the doping metal compound used is a compound of divalent iron, manganese, cobalt, nickel, calcium or magnesium.

3. A process as claimed in claim 1 or 2, wherein the processing into a paste is carried out at from 10 to 90°C.

4. A process as claimed in claim 1 or 2 or 3, wherein the formic or oxalic acid is used in an excess of up to 10% relative to the stoichiometrically required amount.

5. The use of a pigment as prepared in claim 1 or 2 or 3 or 4 for coloring a plastic.

6. The use of a pigment as prepared in claim 1 or 2 or 3 or 4 for coloring a plastic processed at above 280°C.

## Revendications

1. Procédé de préparation de pigments d'oxyde de zinc dopés d'oxydes de métaux, caractérisé en ce que l'on transforme les oxydes, carbonates, hydroxydes et/ou hydroxycarbonates du zinc, en présence d'eau et d'oxydes, de carbonates, d'hydroxydes, d'hydroxycarbonates, d'oxalates, ou de formiates des métaux de dopage, à l'aide d'acide formique et/ou d'acide oxalique, en une proportion suffisant au moins à la conversion des oxydes, carbonates, hydroxydes et/ou hydroxycarbonates susmentionnés, en formiates ou en oxalates, en une pâte, on sèche la pâte, on la broie et on la calcine à des températures de 700 à 1100°C dans une atmosphère d'un gaz inerte.

2. Procédé suivant la revendication 1, caractérisé en ce qu'à titre de composés des métaux de dopage, on utilise ceux du magnésium, du calcium, du nickel, du cobalt, du manganèse et/ou du fer bivalent.

3. Procédé suivant les revendications 1 et 2, caractérisé en ce que l'on entreprend la transformation en pâte à des températures de 10 à 90°C.

4. Procédé suivant l'une quelconque des revendications 1 à 3, caractérisé en ce que l'on ajoute l'acide formique et/ou l'acide oxalique en un excès allant jusqu'à 10% au-delà de la proportion stoechiométriquement nécessaire.

5. Utilisation de pigments préparés suivant l'une quelconque des revendications 1 à 4 pour la teinture de matières plastiques.

6. Utilisation des pigments préparés suivant l'une quelconque des revendications 1 à 4 pour la teinture de matières plastiques qui sont ouvrées à des températures supérieures à 280°C.
